# EUROPEAN PATENT APPLICATION

(11) **EP 4 817 766 A1**
(43) Date of publication of application: **07.10.2026**
(21) Application number: 23960142.0
(22) Date of filing: 29.11.2023
(51) Int. Cl.: B23B 27/20, B23C 5/10, B23C 5/16

(54) **CUTTING TOOL**

(71) Applicant: Sumitomo Electric Hardmetal Corp., Itami-shi, Hyogo 664-0016 (JP)
(72) Inventor: YAMADA, Kento, Itami-shi, Hyogo 664-0016 (JP); MISUMI, Shuhei, Itami-shi, Hyogo 664-0016 (JP); HIGASHI, Taisuke, Itami-shi, Hyogo 664-0016 (JP); HIRABUKI, Yuki, Itami-shi, Hyogo 664-0016 (JP); KUKINO, Satoru, Itami-shi, Hyogo 664-0016 (JP)
(74) Representative: Boult Wade Tennant LLP
(86) International application number: PCT/JP2023/042719
(87) International publication number: WO 2025/115122

(57) **Abstract**

A cutting tool according to the present invention comprises a base material and a diamond layer that covers the base material. The cutting tool has a rake surface and a flank surface. The flank surface is continuous with the rake surface. The ridgeline between the rake surface and the flank surface forms a cutting edge. The diamond layer has a flank surface-covering part. The flank surface-covering part forms the flank surface. The thickness of the flank surface-covering part is 10-25 µm. In a cross-section that is orthogonal to a tangent to the cutting edge, the radius of curvature of the cutting edge is less than the value obtained by multiplying the thickness of the flank surface-covering part by 0.3. The rake surface includes a first portion. The first portion is formed from the flank surface-covering part. The first portion is continuous with the flank surface. The maximum height roughness of the first portion is less than 2 µm.

## Description

### TECHNICAL FIELD

The present disclosure relates to a cutting tool.

### BACKGROUND ART

Japanese Unexamined Patent Application Publication No. 2015-085462 (Patent literature 1) discloses a hard-coated cutting tool in which a cutting edge is formed on a ridge line between a flank face and a rake face of a tool body, and the tool body is coated with a diamond coating. In the hard-coated cutting tool, the thickness of the diamond coating on the flank face side is 8 µm to 30 µm. When the roundness of the edge of the cutting edge is approximated by a circular arc having a radius, the radius is 0.1 times or more and 0.8 times or less the thickness of the diamond coating on the flank face side.

### CITATION LIST

### PATENT LITERATURE

Patent literature 1: Japanese Unexamined Patent Application Publication No. 2015-085462

### SUMMARY OF THE INVENTION

A cutting tool according to the present disclosure is a cutting tool including a base and a diamond layer covering the base. The cutting tool has a rake face and a flank face. The flank face is contiguous to the rake face. A ridgeline between the rake face and the flank face constitutes a cutting edge. The diamond layer includes a flank-face covering portion constituting the flank face. A thickness of the flank-face covering portion is 10 µm to 25 µm. In a cross-section perpendicular to a tangent line of the cutting edge, a radius of curvature of the cutting edge is less than a value obtained by multiplying the thickness of the flank-face covering portion by 0.3. The rake face includes a first portion constituted of the flank-face covering portion. The first portion is contiguous to the flank face. A maximum height roughness of the first portion is less than 2 µm.

### BRIEF DESCRIPTION OF THE DRAWINGS

[FIG. 1] FIG. 1 is a schematic plan view showing a cutting tool according to a first embodiment.
[FIG. 2] FIG. 2 is an enlarged schematic plan view showing a region II of FIG. 1.
[FIG. 3] FIG. 3 is an enlarged schematic side view showing a configuration of a cutting tool according to a first embodiment.
[FIG. 4] FIG. 4 is a cross-sectional schematic view taken along line IV-IV of FIG. 2.
[FIG. 5] FIG. 5 is an enlarged cross-sectional schematic view showing a region V of FIG. 4.
[FIG. 6] FIG. 6 is a flow chart schematically showing a method of manufacturing a cutting tool according to a first embodiment.
[FIG. 7] FIG. 7 is a cross-sectional schematic view showing a step of sharpening a cutting edge by laser-processing a rake face.
[FIG. 8] FIG. 8 is a cross-sectional schematic view showing a configuration of a cutting tool according to a second embodiment.
[FIG. 9] FIG. 9 is a cross-sectional schematic view showing a step of sharpening a cutting edge by laser-processing a rake face in a method of manufacturing a cutting tool according to a second embodiment.
[FIG. 10] FIG. 10 is a partial cross-sectional schematic view showing a use state of a cutting tool according to the present disclosure.

### DETAILED DESCRIPTION

### [Problems to be Solved by Present Disclosure]

When the cutting edge of the cutting tool is covered with the diamond layer, the wear resistance of the tool is improved as the thickness of the diamond layer increases. As the radius of curvature of the cutting edge decreases, the sharpness of the cutting edge improves. This can prevent the cutting tool from being damaged. However, even when the thickness of the diamond layer is large and the radius of curvature of the cutting edge is small, adhesion of chips may occur at the cutting edge due to the surface state of the diamond layer. Thus, the tool is more likely to be damaged due to the formation of the built-up edge. As described above, it has been difficult to improve the tool life of the cutting tool having the diamond layer.

An object of the present disclosure is to provide a cutting tool capable of improving tool life.

### [Advantageous Effect of the Present Disclosure]

According to the present disclosure, a cutting tool capable of improving tool life can be provided.

### [Summary of Embodiments]

First, an overview of the embodiments of the present disclosure will be described.
(1) A cutting tool according to the present disclosure is a cutting tool including a base and a diamond layer covering the base. The cutting tool has a rake face and a flank face. The flank face is contiguous to the rake face. A ridgeline between the rake face and the flank face constitutes a cutting edge. The diamond layer includes a flank-face covering portion constituting the flank face. A thickness of the flank-face covering portion is 10 µm to 25 µm. In a cross-section perpendicular to a tangent line of the cutting edge, a radius of curvature of the cutting edge is less than a value obtained by multiplying the thickness of the flank-face covering portion by 0.3. The rake face includes a first portion constituted of the flank-face covering portion. The first portion is contiguous to the flank face. A maximum height roughness of the first portion is less than 2 µm.
   According to the cutting tool of the present disclosure, a part of the first portion is prevented from protruding excessively. Thus, it is possible to suppress the occurrence of adhesion of chips starting from the excessively protruding portion. As a result, the tool life can be improved.
(2) According to the cutting tool of the above (1), the rake face may include a first rake face portion and a second rake face portion. The first rake face portion may be spaced apart from the flank face. The second rake face portion may be provided between the first rake face portion and the flank face. The second rake face portion may be contiguous to each of the first rake face portion and the flank face. The second rake face portion may be inclined with respect to the first rake face portion in a direction from the first rake face portion toward the flank face. This makes it possible to increase an angle formed by the rake face and the flank face. Thus, the strength of the cutting edge can be improved.
(3) According to the cutting tool of the above (2), an inclination angle of the second rake face portion with respect to the first rake face portion may be 3° to 50°. When the inclination angle of the second rake face portion is 3° or more, it is possible to suppress an excessive decrease in the strength of the cutting edge. When a second angle θ2 is 50° or less, it is possible to suppress excessive decrease in the sharpness of the cutting edge.
(4) According to the cutting tool of the above (2), the thickness of the flank-face covering portion may be 15 µm to 20 µm. This improves the wear resistance of the cutting tool.
(5) According to the cutting tool of any one of the above (1) to (4), in the cross-section perpendicular to the tangent line of the cutting edge, the radius of curvature of the cutting edge may be less than a value obtained by multiplying the thickness of the flank-face covering portion by 0.1. This improves the sharpness of the cutting edge.
(6) In the cutting tool according to any one of the above (1) to (5), the base may be made of cemented carbide containing tungsten carbide particles. An average particle diameter of the tungsten carbide particles may be 2 µm or less. This can prevent the diamond layer from peeling off from the base. As a result, the tool life can be further improved.
(7) According to the cutting tool of any one of the above (1) to (6), a flank angle of the flank face may be 15° to 35°
(8) According to the cutting tool according to any one of the above (1) to (7), a maximum height roughness of the first portion may be less than 1.5 µm.

### [Description of Embodiments]

Hereinafter, details of the embodiment of the present disclosure (hereinafter, also referred to as the embodiment) will be described with reference to the drawings. In the drawings, the same or corresponding components are denoted by the same reference numerals, and the description thereof will not be repeated.

### (First Embodiment)

### <Configuration of Cutting Tool>

First, a configuration of a cutting tool according to a first embodiment will be described.

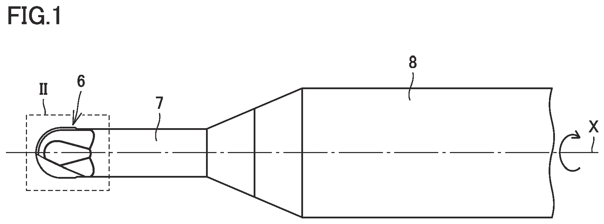

FIG. 1 is a schematic plan view showing a cutting tool according to the first embodiment. A cutting tool 100 according to the first embodiment includes a tip portion 6, a body portion 7, and a shank portion 8. The cutting tool 100 is, for example, a ball end mill. The cutting tool 100 is, for example, a rotary cutting tool that rotates about an axis X as a rotation axis.

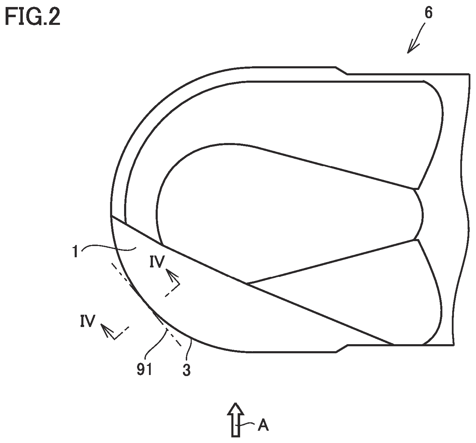

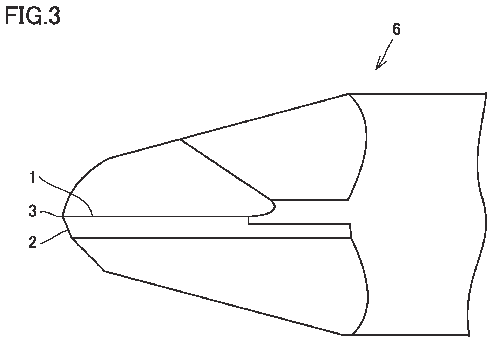

FIG. 2 is an enlarged schematic plan view showing a region II of FIG. 1. FIG. 3 is an enlarged schematic side view showing a configuration of the cutting tool 100 according to the first embodiment. The enlarged schematic side view shown in FIG. 3 is an enlarged schematic side view viewed along arrow A in FIG. 2.

As shown in FIGS. 2 and 3, the cutting tool 100 has a rake face 1 and a flank face 2. The rake face 1 is contiguous to the flank face 2. A ridgeline between the rake face 1 and the flank face 2 constitute a cutting edge 3. As shown in FIG. 2, when viewed perpendicularly to the rake face 1, the tangent line of the cutting edge 3 is referred to as a first imaginary straight line 91.

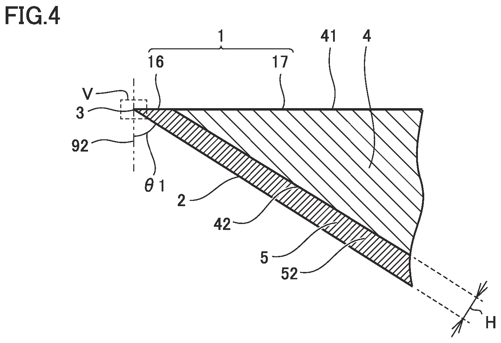

FIG. 4 is a cross-sectional schematic view taken along line IV-IV of FIG. 2. A cross-section shown in FIG. 4 is a cross-section perpendicular to the first imaginary straight line 91 (see FIG. 2). As shown in FIG. 4, the cutting tool 100 has a base 4 and a diamond layer 5.

The base 4 has a first face 41 and a second face 42. The first face 41 constitutes a part of the rake face 1, for example. The second face 42 is contiguous to the first face 41. The second face 42 is substantially parallel to the flank face 2.

The diamond layer 5 covers at least a part of the base 4. Specifically, the diamond layer 5 covers the second face 42. The diamond layer 5 constitutes the flank face 2. A portion of the diamond layer 5 constituting the flank face 2 is referred to as a flank-face covering portion 52. The first face 41 is exposed from the diamond layer 5, for example.

The diamond layer 5 contains, for example, diamond crystals. The diamond layer 5 is made of, for example, polycrystalline diamond. The diamond layer 5 may contain a component other than diamond (for example, an amorphous component). The diamond layer 5 does not have to contain diamond crystals. The diamond layer 5 may be made of, for example, Diamond Like Carbon (DLC).

The rake face 1 is, for example, planar. The rake face 1 is constituted of the flank-face covering portion 52 and the base 4. A portion of the rake face 1 constituted of the flank-face covering portion 52 is referred to as a first portion 16. The first portion 16 is contiguous to the flank face 2. From another point of view, a ridgeline between the first portion 16 and the flank face 2 constitutes the cutting edge 3. A portion of the rake face 1 constituted of the base 4 is referred to as a second portion 17. In other words, the rake face 1 has the first portion 16 and the second portion 17. The second portion 17 is substantially parallel to the first portion 16.

A thickness H of the flank-face covering portion 52 is 10 µm to 25 µm. The thickness H is a thickness of the flank-face covering portion 52 in the direction perpendicular to the flank face 2. The thickness H may be, for example, 15 µm to 20 µm, or 15 µm to 17 µm. The thickness H may be, for example, 12 µm or more, or may be 14 µm or more. The thickness H may be, for example, 22 µm or less, or may be 18 µm or less.

### <Maximum height roughness>

As an index for quantifying the surface roughness, there is maximum height roughness defined as Rz (hereinafter, also referred to as maximum height roughness Rz or Rz). The maximum height roughness Rz is a surface-property parameter defined in JIS (Japanese Industrial Standards) B0601:2013.

The Rz of the first portion 16 is less than 2 µm. The Rz of the first portion 16 may be, for example, 1.8 µm or less, may be less than 1.5 µm, or may be 1.2 µm or less. The Rz may be, for example, 0.01 µm or more, or 0.5 µm or more.

The Rz is measured using, for example, a laser microscope ("OPTELICS HYBRID" (trademark) manufactured by Lasertec Corporation). For example, five different measurement regions are set in the first portion 16. Each of the five measurement regions is a line-shaped region. The positions of the five measurement regions are randomly selected in the first portion 16. An average value of the Rz measured in the five measurement regions is set as the Rz of the first portion 16. In other words, a value obtained by dividing a sum of values of the Rz in the five measurement regions by five is set as the Rz of the first portion 16. A measurement pitch is set to, for example, 0.1 µm. A measurement range is, for example, 10 µm.

### <Radius of curvature and Second inclination angle>

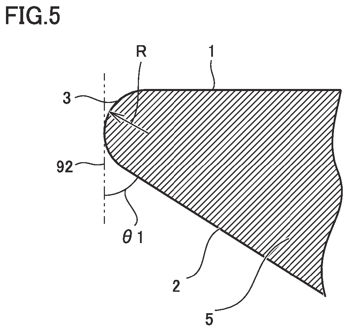

FIG. 5 is an enlarged cross-sectional schematic view showing a region V of FIG. 4. As shown in FIG. 5, the shape of the cutting edge 3 may be a substantially arc shape in a cross-section perpendicular to the first imaginary straight line 91. In a cross-section perpendicular to the first imaginary straight line 91, a radius of curvature R of the cutting edge 3 is less than a value obtained by multiplying the thickness H (see FIG. 4) of the flank-face covering portion 52 by 0.3. The radius of curvature R may be, for example, less than a value obtained by multiplying the thickness H by 0.2, less than a value obtained by multiplying the thickness H by 0.1, or less than a value obtained by multiplying the thickness H by 0.08. The radius of curvature R is larger than a value obtained by multiplying the thickness H by 0.001, for example. The radius of curvature R is, for example, 0.5 µm to 7 µm.

As shown in FIGS. 4 and 5, in a cross-section perpendicular to the first imaginary straight line 91, a straight line that is perpendicular to the rake face 1 and is tangential to the cutting edge 3 is referred to as a second imaginary straight line 92. In a cross-section perpendicular to the first imaginary straight line 91, the flank face 2 is inclined with respect to the second imaginary straight line 92 in a direction from the cutting edge 3 toward the rake face 1. From another viewpoint, the flank face 2 is inclined with respect to the second imaginary straight line 92 in a direction from a front end 58 toward a rear end 59. In a cross-section perpendicular to the first imaginary straight line 91, an inclination angle (first angle θ1) of the flank face 2 with respect to the second imaginary straight line 92 is, for example, 15° to 35°. The first angle θ1 may be, for example, 17° or more, or may be 19° or more. The first angle θ1 may be, for example, 33° or less, or 30° or less. The first angle θ1 is the flank angle of the flank face 2.

The radius of curvature R and the first angle θ1 are measured using, for example, "Point Autofocus Probe Surface Texture Measuring Instrument PF-60" manufactured by Mitaka Kohki Co., Ltd. For example, five different measurement regions are set in the rake face 1 and the flank face 2. Each of the five measurement regions is a line-shaped region extending substantially perpendicular to the tangent line (first imaginary straight line 91, see FIG. 2) of the cutting edge 3 and intersecting the cutting edge 3. The positions of the five measurement regions are randomly selected in the first portion 16. The measurement pitch is set to, for example, 0.1 µm. The measurement range is set to, for example, 200 µm.

In each of the five measurement regions, a curve indicating the shape of the flank face 2, the cutting edge 3, and the rake face 1 is acquired. Based on the five curves obtained, the radius of curvature of the cutting edge 3 is measured in each of the five measurement regions. The average value of the radii of curvature of the cutting edge 3 in the five measurement regions is set as the radius of curvature R of the cutting edge 3 in the cutting tool 100. In other words, a value obtained by dividing the sum of the radii of curvature of the cutting edge 3 of the five measurement regions by five is referred to as the radius of curvature R of the cutting edge 3 in the cutting tool 100.

Similarly, the inclination angle of the flank face 2 with respect to the second imaginary straight line 92 in each of the five measurement regions is measured based on the five acquired curves. The average value of the inclination angles of the flank face 2 with respect to the second imaginary straight line 92 in the five measurement regions is set as the first angle θ1. **In** other words, a value obtained by dividing the sum of the inclination angles of the flank face 2 with respect to the second imaginary straight line 92 of the five measurement regions by five is referred to as the first angle θ1.

### <Material Constituting Base>

The base 4 is made of, for example, cemented carbide containing tungsten carbide (WC) particles. The cemented carbide constituting the base 4 contains, for example, tungsten carbide particles and a binder such as cobalt.

An average particle diameter of the WC particles contained in the cemented carbide constituting the base 4 is, for example, 2 µm or less. The average particle diameter of the WC particles contained in the cemented carbide constituting the base 4 may be, for example, 1.5 µm or less, or 1 µm or less. The average particle diameter of the WC particles contained in the cemented carbide constituting the base 4 may be, for example, 0.01 µm or more, or 0.1 µm or more.

**In** the present specification, the average particle diameter of the WC particles is an average value of equivalent circle diameters for the WC particles. "The average value of the equivalent circle diameters for the WC particles" means the arithmetic average of the equivalent circle diameters for the WC particles measured on the surface or cross-section of the cemented carbide on a number basis. The average value of the equivalent circle diameters of the tungsten carbide particles is measured by the following procedure.

Specifically, randomly selected surfaces or cross-sections of the cemented carbides are mirror finished. Examples of the mirror finishing method include a method of polishing with a diamond paste, a method using a focused ion beam (FIB) apparatus, a method using a cross-section polisher (CP) apparatus, and a method of combining these methods.

The finished surface of the cemented carbide is photographed using a scanning electron microscopy ("S-3400N" manufactured by Hitachi High-Tech Corporation). Three of the photographed images are prepared. The respective imaging regions of the three images are different. The imaging location can be randomly selected. The imaging condition is a backscattered electron image. The observation magnification is set to 5000 times. The acceleration voltage is set to 10 kV.

The three backscattered electron images are imported into a computer using image analysis software (ImageJ, version 1.51j8: https://imagej.nih.gov/ij/). The binarization processing is performed on the three backscattered electron images. The binarization processing is executed under the conditions set in advance in the image analysis software by pressing the indication of "Make Binary" on the computer screen after importing the image. **In** the image after the binarization processing, the tungsten carbide particles, and a portion other than the tungsten carbide particles can be distinguished by the density of color. For example, in the image after the binarization processing, the tungsten carbide particles are shown in black regions, and the portion other than the tungsten carbide particles is shown in a white region.

A rectangular measurement field of view having a length of 25.3 µm and a width of 17.6 µm is set in each of the three acquired images after binarization processing. Using the image analysis software, the equivalent circle diameter (Heywood diameter: projected area equivalent circle diameter) is measured for each of all the tungsten carbide particles (black regions) in the three measurement fields. The arithmetic average value of the equivalent circle diameters of all the tungsten carbide particles in the three measurement fields is calculated on a number basis. **In** the present specification, the arithmetic average value corresponds to the average value of the equivalent circle diameters of the WC particles.

As far as the applicant measured, as long as the same sample was measured, even when the above measurement was performed a plurality of times while changing the location of the measurement field, the variation in the measurement results was small, and it was confirmed that even when the measurement fields of view were randomly selected, that was not arbitrary.

### <Method of Manufacturing Cutting Tool>

Next, a method of manufacturing the cutting tool 100 according to the first embodiment will be described.

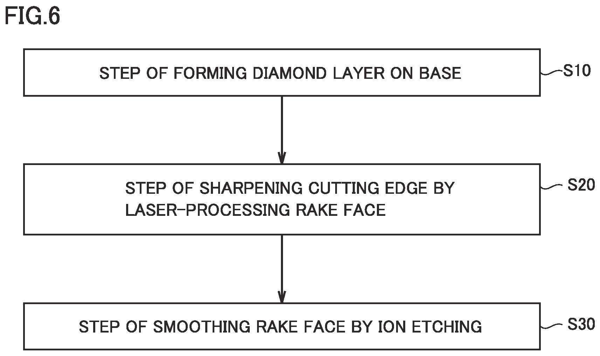

FIG. 6 is a flow chart schematically showing a method of manufacturing a cutting tool according to the first embodiment. As shown in FIG. 6, the method of manufacturing the cutting tool 100 includes a step (S10) of forming a diamond layer on a base, a step (S20) of sharpening a cutting edge by laser-processing a rake face, and a step (S30) of smoothing the rake face by ion etching.

First, the step (S10) of forming the diamond layer on the base is performed. Specifically, the diamond layer 5 is formed on the base 4 by using, for example, hot filament chemical vapor deposition (HFCVD). As a result, each of the first face 41 and the second face 42 of the base 4 is covered with the diamond layer 5.

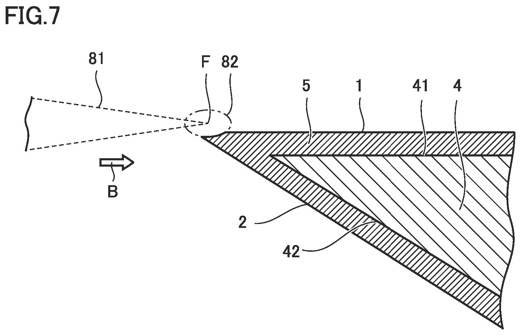

Next, the step (S20) of sharpening the cutting edge by laser-processing the rake face is performed. FIG. 7 is a cross-sectional schematic view showing the step (S20) of sharpening the cutting edge by laser-processing the rake face. As shown in FIG. 7, at least a part of the diamond layer 5 constituting the rake face 1 is removed by using laser processing. Specifically, the cutting tool 100 is irradiated with a laser 81. An irradiation direction of the laser 81 is a direction along an arrow B. The irradiation direction of the laser 81 is substantially parallel to the rake face 1, for example. From another viewpoint, the irradiation direction of the laser 81 is substantially parallel to the first face 41, for example.

A laser processing region 82 is formed around a focal point F of the laser 81. The laser processing region 82 is a region where the energy of the laser 81 is concentrated. The portion of the cutting tool 100 that is within the laser processing region 82 is removed. The laser 81 is scanned, whereby the diamond layer 5 constituting the rake face 1 is removed in a predetermined range. This makes it possible to sharpen the cutting edge 3. In other words, the radius of curvature R of the cutting edge 3 can be reduced.

When the irradiation direction of the laser 81 is perpendicular to the rake face 1, most of the irradiated laser 81 hits the cutting tool 100. In this case, the region of the diamond layer 5 that generates heat due to the irradiation of the laser 81 becomes large. Thus, the surface roughness of the diamond layer 5 is more likely to deteriorate due to the heat generation. Specifically, for example, the surface roughness of the diamond layer 5 is deteriorated by the occurrence of an oxidation reaction in the diamond layer 5 that has generated heat.

According to the method of manufacturing the cutting tool 100 according to the first embodiment, the irradiation direction of the laser 81 is substantially parallel to the rake face 1. Thus, a part of the laser 81 passes through the focal point F without hitting the cutting tool 100. This can reduce the region of the diamond layer 5 that generates heat due to the irradiation of the laser 81. As a result, deterioration of the surface roughness of the diamond layer 5 can be suppressed. By suppressing the deterioration of the surface roughness of the diamond layer 5, it is possible to shorten the processing time in the step (S30) of smoothing the rake face by using ion etching described later.

Next, the step (S30) of smoothing the rake face by using ion etching is performed. Ion etching is performed so that each of the rake face 1 and the flank face 2 is etched. The rake face 1 is smoothed. Specifically, the maximum height roughness of the first portion 16 is reduced. The processing time in the ion etching is set to, for example, 0.3 hours. By setting the processing time in the ion etching to about 0.3 hours, it is possible to suppress the thickness H (see FIG. 4) of the flank-face covering portion 52 from becoming excessively small. In this manner, the cutting tool 100 according to the first embodiment shown in FIGS. 1 to 4 is manufactured.

### (Second embodiment)

### <Configuration of Cutting Tool>

Next, a configuration of a cutting tool 100 according to a second embodiment will be described. The cutting tool 100 according to the second embodiment is different from the cutting tool 100 according to the first embodiment mainly in that the rake face 1 has a first rake face portion 11 and a second rake face portion 12, and is substantially the same as the cutting tool 100 according to the first embodiment in other respects. Hereinafter, the differences from the cutting tool 100 according to the first embodiment will be mainly described.

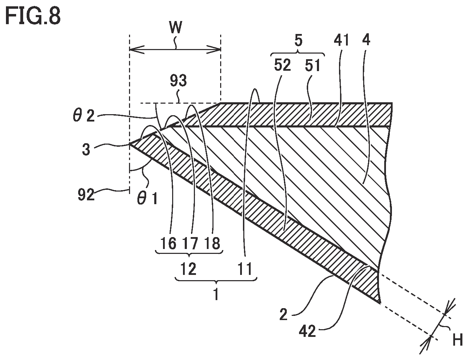

FIG. 8 is a cross-sectional schematic view showing a configuration of the cutting tool 100 according to the second embodiment. A cross-section shown in FIG. 8 corresponds to the cross-section shown in FIG. 4. As shown in FIG. 8, the diamond layer 5 may cover the first face 41 of the base 4. A portion of the diamond layer 5 covering the first face 41 is referred to as a rake-face covering portion 51. From another point of view, the diamond layer 5 has the rake-face covering portion 51 and the flank-face covering portion 52.

The rake face 1 may include the first rake face portion 11 and the second rake face portion 12. The first rake face portion 11 is constituted of, for example, the diamond layer 5. The first rake face portion 11 is spaced apart from the flank face 2. The first rake face portion 11 is substantially parallel to the first face 41.

The second rake face portion 12 is provided between the first rake face portion 11 and the flank face 2. The second rake face portion 12 is contiguous to each of the first rake face portion 11 and the flank face 2. A ridgeline between the second rake face portion 12 and the flank face 2 constitutes the cutting edge 3.

The second rake face portion 12 is inclined with respect to the first rake face portion 11 in a direction from the first rake face portion 11 toward the flank face 2. Specifically, in the direction perpendicular to the rake face 1, the second rake face portion 12 is inclined in the direction from the first rake face portion 11 toward the flank face 2. When the rake face 1 has the first rake face portion 11 and the second rake face portion 12, the direction perpendicular to the rake face 1 is the direction perpendicular to the first rake face portion 11.

An inclination angle of the second rake face portion 12 with respect to the first rake face portion 11 is referred to as a second angle θ2. In a cross-section perpendicular to a tangent line of the cutting edge 3, the second angle θ2 is an angle formed by the second rake face portion 12 and an extension line 93 of the first rake face portion 11. The second angle θ2 is, for example, 3° to 50°. The second angle θ2 may be, for example, 3° to 40°. The second angle θ2 may be, for example, 5° or more, or may be 10° or more. The second angle θ2 may be, for example, 35° or less, 30° or less, or 20° or less.

The second rake face portion 12 is constituted of the first portion 16, the second portion 17, and a third portion 18. The first portion 16 is provided between the flank face 2 and the second portion 17. The second portion 17 is a portion of the second rake face portion 12 constituted of the base 4. The second portion 17 is contiguous to the first portion 16. The second portion 17 is spaced apart from the flank face 2. The second portion 17 is provided between the first portion 16 and the third portion 18.

The third portion 18 is a portion of the second rake face portion 12 constituted of the rake-face covering portion 51. The third portion 18 is provided between the second portion 17 and the first rake face portion 11. The third portion 18 is contiguous to each of the second portion 17 and the first rake face portion 11. The third portion 18 is spaced apart from the first portion 16.

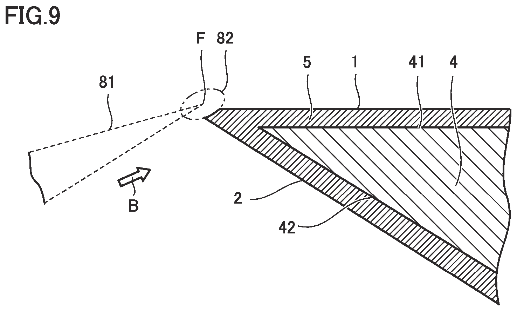

As shown in FIG. 9, a width W of the second rake face portion 12 in the direction perpendicular to the tangent line of the cutting edge 3 (see FIG. 2) is, for example, 0.01 mm to 0.2 mm. In the base 4, the second portion 17 is contiguous to each of the first face 41 and the second face 42. The second portion 17 is provided between the first face 41 and the second face 42. The second portion 17 is inclined with respect to the first face 41 in a direction from the first rake face portion 11 toward the flank face 2. The second face 42 is spaced apart from the first face 41.

### <Method of Manufacturing Cutting Tool>

Next, a method of manufacturing the cutting tool 100 according to the second embodiment will be described. FIG. 9 is a c cross-sectional schematic view showing a step (S20) of sharpening a cutting edge by laser-processing a rake face in the method of manufacturing the cutting tool 100 according to the second embodiment. As shown in FIG. 9, in the method of manufacturing the cutting tool 100 according to the second embodiment, the irradiation direction (arrow B) of the laser 81 is inclined with respect to the rake face 1. From another viewpoint, the irradiation direction of the laser 81 is substantially inclined with respect to the first face 41, for example. An inclination angle of the irradiation direction of the laser 81 with respect to the rake face 1 is the second angle θ2 (see FIG. 8). From another point of view, the irradiation direction of the laser 81 is substantially parallel to the second rake face portion 12 (see FIG. 8). As a result, the second rake face portion 12 is formed while reducing the radius of curvature R of the cutting edge 3.

### <Use State>

Next, a use state of the cutting tool 100 according to the present disclosure will be described.

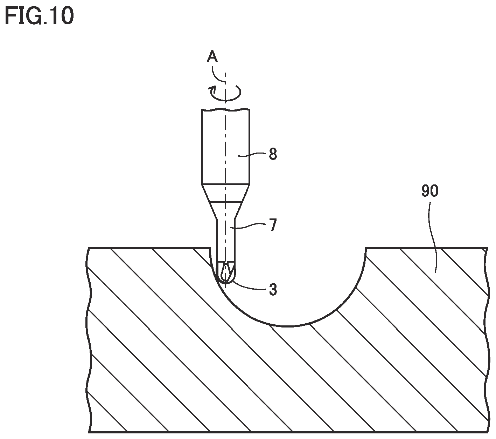

FIG. 10 is a partial cross-sectional schematic view showing a use state of the cutting tool 100 according to the present disclosure. As shown in FIG. 10, a workpiece 90 is prepared. The workpiece 90 is made of, for example, cemented carbide. Specifically, the workpiece 90 is made of, for example, cemented carbide. The workpiece 90 may be made of, for example, ceramics such as alumina, silicon carbide, silicon, carbon fiber reinforced plastics (CFRP), or the like. While the cutting tool 100 rotates about the axis X, the cutting edge 3 is made into contact with the workpiece 90. Thus, the workpiece 90 is cut.

Next, effects of the cutting tool 100 according to the present disclosure will be described. For example, when the workpiece is made of a hard and brittle material such as cemented carbide, it is necessary to cut ceramic particles having high hardness by using a cutting tool. In this case, the cutting tool having a diamond layer with high hardness is usually used. When the cutting edge of the cutting tool is covered with the diamond layer, the cutting edge becomes rounded as the thickness of the diamond layer increases. In this case, the sharpness of the cutting edge decreases, and the tool becomes more likely to be damaged. On the other hand, when the thickness of the diamond layer is excessively thin, the wear resistance of the tool becomes excessively low. Even when both a sufficient thickness of the diamond layer and high sharpness of the cutting edge are achieved by processing the diamond layer, adhesion of chips may occur at the cutting edge due to the surface state of the diamond layer. In this case, the tool is more likely to be damaged due to the formation of the built-up edge. In particular, when the workpiece is made of cemented carbide, tungsten carbide particles contained in the cemented carbide are likely to adhere to the cutting edge. As described above, it has been difficult to improve the tool life of the cutting tool having the diamond layer.

According to the cutting tool 100 of the present disclosure, the diamond layer 5 has the flank-face covering portion 52. The flank-face covering portion 52 constitutes the flank face 2. The rake face 1 has the first portion 16. The first portion 16 is constituted of the flank-face covering portion 52. The maximum height roughness of the first portion 16 is less than 2 µm. In this manner, a part of the first portion 16 is prevented from protruding excessively. When the workpiece 90 is cut by using the cutting tool 100, chips are likely to come into contact with the first portion 16. Thus, it is possible to suppress the occurrence of adhesion of chips starting from the excessively protruding portion. As a result, the tool life can be improved.

According to the cutting tool 100 of the present disclosure, a thickness of the flank-face covering portion 52 is 10 µm to 25 µm. When the thickness of the flank-face covering portion 52 is 10 µm or more, the wear resistance of the cutting tool 100 can be sufficiently improved.

According to the cutting tool 100 of the present disclosure, in the cross-section perpendicular to the tangent line of the cutting edge 3, the radius of curvature R of the cutting edge 3 is less than a value obtained by multiplying the thickness of the flank-face covering portion 52 by 0.3. This can sufficiently improve the sharpness of the cutting edge 3. As a result, the tool is less likely to be damaged.

According to the cutting tool 100 of the second embodiment, the rake face 1 includes the first rake face portion 11 and the second rake face portion 12. The second rake face portion 12 is inclined with respect to the first rake face portion 11 in a direction from the first rake face portion 11 toward the flank face 2. This makes it possible to increase an angle formed by the rake face 1 and the flank face 2. Thus, the strength of the cutting edge 3 can be improved.

According to the cutting tool 100 of the second embodiment, the inclination angle (second angle θ2) of the second rake face portion 12 with respect to the first rake face portion 11 is 3° to 50°. When the second angle θ2 is 3° or more, an angle formed by the second rake face portion 12 and the flank face 2 can be prevented from becoming excessively small. This can prevent the strength of the cutting edge 3 from being excessively decreased. When the second angle θ2 is 50° or less, the angle formed by the second rake face portion 12 and the flank face 2 can be prevented from becoming excessively large. This can prevent the sharpness of the cutting edge 3 from being excessively decreased.

According to the cutting tool 100 of the present disclosure, the base 4 is made of cemented carbide containing tungsten carbide particles. The average particle diameter of the tungsten carbide particles is 2 µm or less. As the average particle diameter of the tungsten carbide particles decreases, the adhesion between the base 4 and the diamond layer 5 improves. Thus, when the average particle diameter of the tungsten carbide particles is 2 µm or less, the adhesion between the base 4 and the diamond layer 5 can be improved. This can prevent the diamond layer 5 from peeling off from the base 4. As a result, the tool life can be further improved.

Although the configuration in which the cutting tool 100 is a ball end mill is described in the above, the cutting tool 100 according to the present disclosure is not limited to the ball end mill. For example, the cutting tool 100 may be a radius end mill or the like. The cutting tool 100 may be a turning tool, such as a cutting insert.

### EXAMPLES

### (Sample Preparation)

First, the cutting tools 100 according to samples 1 to 22 were prepared. The samples 1, 3, 4, 8 to 18 and 22 correspond to examples. The samples 2, 5 to 7 and 19 to 21 correspond to comparative examples. In accordance with the method of manufacturing the cutting tool 100 according to the present disclosure described above, the cutting tools 100 according to samples 1 to 22 were manufactured. Specifically, the cutting tools 100 were manufactured using the conditions shown in Table 1 below.

**[Table 1]**

| | Irradiation Direction of Laser | Ion Etching Processing Time [hour] | Second Inclination Angle [°] | Thickness (H) of Flank-Face Covering Portion [µm] | Radius of Curvature (R) [µm] | R/H | Rz of Firs Portion [µm] | WC Average Particle Diameter [µm] | First Inclination Angle [°] |
|---|---|---|---|---|---|---|---|---|---|
| Sample 1 | Horizontal | 0.3 | 0 | 10.1 | 2.73 | 0.270 | 1.8 | 3 | 15 |
| Sample 2 | Horizontal | 0.3 | 0 | 16 | 4.80 | 0.300 | 1.72 | 3 | 15 |
| Sample 3 | Horizontal | 0.3 | 0 | 10.3 | 2.68 | 0.260 | 1.92 | 3 | 15 |
| Sample 4 | Horizontal | 0.3 | 0 | 24.8 | 6.70 | 0.270 | 1.84 | 3 | 15 |
| Sample 5 | Horizontal | 0.3 | 0 | 9.5 | 2.38 | 0.250 | 1.82 | 3 | 15 |
| Sample 6 | Horizontal | 0.3 | 0 | 27 | 7.13 | 0.264 | 1.66 | 3 | 15 |
| Sample 7 | Horizontal | 0 | 0 | 12 | 3.32 | 0.277 | 2.09 | 3 | 15 |
| Sample 8 | Inclined | 0.3 | 3 | 11.7 | 3.18 | 0.272 | 1.68 | 3 | 15 |
| Sample 9 | Inclined | 0.3 | 50 | 10.9 | 2.80 | 0.257 | 1.88 | 3 | 15 |
| Sample 10 | Inclined | 0.3 | 3 | 13.2 | 1.06 | 0.080 | 1.74 | 3 | 15 |
| Sample 11 | Inclined | 0.3 | 3 | 11 | 0.90 | 0.082 | 1.82 | 2 | 15 |
| Sample 12 | Inclined | 0.3 | 3 | 10.6 | 0.96 | 0.091 | 1.72 | 0.5 | 15 |
| Sample 13 | Inclined | 0.3 | 3 | 15.1 | 1.34 | 0.089 | 1.7 | 0.5 | 15 |
| Sample 14 | Inclined | 0.3 | 3 | 20 | 1.66 | 0.083 | 1.85 | 0.5 | 15 |
| Sample 15 | Inclined | 0.3 | 3 | 15.5 | 1.29 | 0.084 | 1.44 | 0.5 | 15 |
| Sample 16 | Inclined | 0.3 | 3 | 16.4 | 1.30 | 0.079 | 1.1 | 0.5 | 20 |
| Sample 17 | Inclined | 0.3 | 3 | 15.2 | 1.17 | 0.077 | 1.41 | 0.5 | 35 |
| Sample 18 | Inclined | 0.3 | 3 | 15.6 | 1.21 | 0.078 | 0.08 | 0.5 | 40 |
| Sample 19 | - | 0.3 | 0 | 17.2 | 7.20 | 0.419 | 3.11 | 3 | 15 |
| Sample 20 | - | 0 | 0 | 18 | 15.20 | 0.844 | 4.38 | 3 | 15 |
| Sample 21 | Perpendicular | 0.3 | 0 | 15.4 | 1.10 | 0.071 | 2.33 | 0.5 | 30 |
| Sample 22 | Inclined | 0.3 | 55 | 12.8 | 0.97 | 0.076 | 1.85 | 3 | 15 |

Table 1 shows the manufacturing conditions of the cutting tools 100 and the parameters of the cutting tools 100 in the samples 1 to 22. As shown in Table 1, in each of the samples 1 to 18, 21, and 22, the step (S20) of sharpening the cutting edge by laser-processing the rake face was performed. In each of the samples 1 to 7, the irradiation direction of the laser 81 was parallel to the rake face 1. In each of the samples 8 to 18 and 22, the irradiation direction of the laser 81 was inclined with respect to the rake face 1. From another viewpoint, the cutting tools 100 according to the samples 8 to 18 and 22 included the second rake face portions 12. In the sample 21, the irradiation direction of the laser 81 was perpendicular to the rake face 1. In each of the samples 19 and 20, the step (S20) of sharpening the cutting edge by laser-processing the rake face was omitted.

In each of the samples 1 to 6, 8 to 19, 21, and 22, the processing time of ion etching in the step (S30) of smoothing the rake face by using ion etching was set to 0.3 hours. In each of the samples 7 and 20, the step (S30) of smoothing the rake face by using ion etching was omitted.

In each of the samples 1 to 7 and 19 to 21, the second angle θ2 was 0°. In other words, in each of the samples 1 to 7 and 19 to 21, the rake face 1 was planar (see FIG. 4). In each of the samples 8 to 18 and 22, the second angle θ2 was set to be 3° to 55°. In other words, in each of the samples 8 to 18 and 22, the rake face 1 had the first rake face portion 11 and the second rake face portion 12 (see FIG. 7).

In each of the samples according to the examples (samples 1, 3, 4, 8 to 18, and 22), the thickness H was 10.1 µm to 24.8 µm. The value (R/H) obtained by dividing the radius of curvature R by the thickness H was 0.076 to 0.272. In other words, the radius of curvature R was equal to or more than a value obtained by multiplying the thickness H by 0.076 and equal to or less than a value obtained by multiplying the thickness H by 0.272. The Rz of the first portion 16 was 0.08 µm to 1.92 µm.

In each of the samples 2, 19, and 20, the value (R/H) obtained by dividing the radius of curvature R by the thickness H was 0.3 or more. In the sample 5, the thickness H of the flank-face covering portion 52 was less than 10 µm. In the sample 6, the thickness H was larger than 25 µm. In each of the samples 7 and 19 to 21, the Rz of the first portion 16 was 2 µm or more.

In each of the samples 1 to 22, the average particle diameter of the tungsten carbide particles contained in the cemented carbide constituting the base 4 was 0.5 µm to 3 µm. In each of the samples 11 to 18, the average particle diameter of the tungsten carbide particles was 0.5 µm to 2 µm. In each of the samples 1 to 22, the first angle θ1 was 15° to 40°. In each of the samples 1 to 22, the radius of the tip portion 6 was 0.5 mm.

### (Evaluation Method)

Next, the tool life of the cutting tool 100 according to each of the samples 1 to 22 was evaluated. In particular, using the cutting tool 100 of each of the samples 1 to 22, the machining was performed to drill a hemispherical hole with a diameter of 10 mm and a depth of 5 mm in the workpiece 90. The workpiece 90 was made of cemented carbide. In the machining, the rotation speed of the cutting tool 100 was set to 30000 rpm. The table feed rate was 200 m/min. The cutting depth in the direction parallel to the axis X (axial cutting depth ap) was set to 0.04 mm. The cutting depth in the direction perpendicular to the axis X (radial cutting depth ae) was set to 0.2 mm. The volume of the workpiece 90 (machined volume) that could be cut before the cutting tool 100 was broken was measured.

### (Evaluation Results)

**[Table 2]**

| | Machined Volume [mm³] |
|---|---|
| Sample 1 | 1046 |
| Sample 2 | 523 |
| Sample 3 | 1046 |
| Sample 4 | 1046 |
| Sample 5 | 679.9 |
| Sample 6 | 627.6 |
| Sample 7 | 575.3 |
| Sample 8 | 1150.6 |
| Sample 9 | 1150.6 |
| Sample 10 | 1307.5 |
| Sample 11 | 1464.4 |
| Sample 12 | 1464.4 |
| Sample 13 | 1569 |
| Sample 14 | 1621.3 |
| Sample 15 | 1830.5 |
| Sample 16 | 1987.4 |
| Sample 17 | 1935.1 |
| Sample 18 | 1621.3 |
| Sample 19 | 156.9 |
| Sample 20 | 52.3 |
| Sample 21 | 261.5 |
| Sample 22 | 1098.3 |

Table 2 shows the evaluation results of the samples 1 to 22. As shown in Table 2, in the samples (samples 2, 5 to 7, and 19 to 21) according to the comparative example, the machined volumes were 679.9 mm³ or less. In the samples according to the examples (samples 1, 3, 4, 8 to 18, and 22), the machined volumes were 1046 mm³ or more.

From the above results, it was confirmed that the cutting tools 100 according to the examples has improved tool lives as compared with the cutting tools 100 according to the comparative examples.

The embodiments and examples disclosed herein are to be considered in all respects as illustrative and not restrictive. The scope of the present invention is given by claims rather than the above-described embodiments and examples, and is intended to include any modifications within the scope and meaning equivalent to the scope of claims.

### REFERENCE SIGNS LIST

1 rake face, 2 flank face, 3 cutting edge, 4 base, 5 diamond layer, 6 tip portion, 7 body portion, 8 shank portion, 11 first rake face portion, 12 second rake face portion, 16 first portion, 17 second portion, 18 third portion, 41 first face, 42 second face, 51 rake-face covering portion, 52 flank-face covering portion, 58 front end, 59 rear end, 81 laser, 82 laser processing region, 90 workpiece, 91 first imaginary straight line, 92 second imaginary straight line, 100 cutting tool, A, B arrow, F focal point, H thickness, R radius of curvature, W width, X axis, θ1 first angle, θ2 second angle.

## Claims

1. A cutting tool comprising a base and a diamond layer covering the base,
wherein the cutting tool has a rake face and a flank face, the flank face being contiguous to the rake face,
wherein a ridgeline between the rake face and the flank face constitutes a cutting edge,
wherein the diamond layer includes a flank-face covering portion constituting the flank face,
wherein a thickness of the flank-face covering portion is 10 µm to 25 µm, wherein, in a cross-section perpendicular to a tangent line of the cutting edge, a radius of curvature of the cutting edge is less than a value obtained by multiplying the thickness of the flank-face covering portion by 0.3,
wherein the rake face includes a first portion constituted of the flank-face covering portion, the first portion being contiguous to the flank face, and
wherein a maximum height roughness of the first portion is less than 2 µm.

2. The cutting tool according to claim 1,
wherein the rake face includes
a first rake face portion spaced apart from the flank face, and
a second rake face portion provided between the first rake face portion and the flank face, the second rake face portion being contiguous to each of the first rake face portion and the flank face, and
wherein the second rake face portion is inclined with respect to the first rake face portion in a direction from the first rake face portion toward the flank face.

3. The cutting tool according to claim 2,
wherein an inclination angle of the second rake face portion with respect to the first rake face portion is 3° to 50°.

4. The cutting tool according to any one of claim 1 to claim 3,
wherein the thickness of the flank-face covering portion is 15 µm to 20 µm.

5. The cutting tool according to any one of claim 1 to claim 4,
wherein, in the cross-section perpendicular to the tangent line of the cutting edge, the radius of curvature of the cutting edge is less than a value obtained by multiplying the thickness of the flank-face covering portion by 0.1.

6. The cutting tool according to any one of claim 1 to claim 5,
wherein the base is made of cemented carbide containing tungsten carbide particles, and
wherein an average particle diameter of the tungsten carbide particles is 2 µm or less.

7. The cutting tool according to any one of claim 1 to claim 6,
wherein a flank angle of the flank face is 15° to 35°.

8. The cutting tool according to any one of claim 1 to claim 7,
wherein a maximum height roughness of the first portion is less than 1.5 µm.
